(19) Europäisches Patentamt / European Patent Office / Office européen des brevets

(11) **EP 2 403 037 B1**

(12) **EUROPEAN PATENT SPECIFICATION**

(45) Date of publication and mention
of the grant of the patent:
**04.05.2016 Bulletin 2016/18**

(21) Application number: **10739832.3**

(22) Date of filing: **04.02.2010**

(51) Int Cl.:
*H01M 4/13* (2010.01)   *H01M 4/131* (2010.01)
*H01M 4/139* (2010.01)   *H01M 10/0525* (2010.01)
*H01M 10/0566* (2010.01)   *H01M 10/0585* (2010.01)
*H01M 10/0587* (2010.01)   *H01M 4/04* (2006.01)
*H01M 4/1391* (2010.01)   *H01M 4/505* (2010.01)
*H01M 4/525* (2010.01)   *H01M 4/62* (2006.01)
*H01M 4/02* (2006.01)

(86) International application number:
**PCT/JP2010/000661**

(87) International publication number:
**WO 2010/098018 (02.09.2010 Gazette 2010/35)**

(54) **ELECTRODE PLATE FOR NONAQUEOUS SECONDARY BATTERY, MANUFACTURING METHOD THEREFOR, AND NONAQUEOUS SECONDARY BATTERY USING SAME**

ELEKTRODENPLATTE FÜR EINE NICHTWÄSSRIGE SEKUNDÄRBATTERIE, VERFAHREN ZU IHRER HERSTELLUNG UND NICHTWÄSSRIGE SEKUNDÄRBATTERIE DAMIT

ELECTRODE PLANE POUR BATTERIE RECHARGEABLE NON AQUEUSE, PROCÉDÉ DE FABRICATION ASSOCIÉ ET BATTERIE RECHARGEABLE NON AQUEUSE UTILISANT LADITE ÉLECTRODE PLANE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **24.02.2009 JP 2009040062**

(43) Date of publication of application:
**04.01.2012 Bulletin 2012/01**

(73) Proprietor: **Panasonic Intellectual Property Management Co., Ltd.**
**Osaka 540-6207 (JP)**

(72) Inventors:
• **FUJIWARA, Isao**
**Osaka-shi,**
**Osaka 540-6207 (JP)**

• **KUROMIYA, Takao**
**Osaka-shi,**
**Osaka 540-6207 (JP)**
• **UEYAMA, Yasuhiro**
**Osaka-shi,**
**Osaka 540-6207 (JP)**

(74) Representative: **Grünecker Patent- und Rechtsanwälte**
**PartG mbB**
**Leopoldstraße 4**
**80802 München (DE)**

(56) References cited:
**WO-A2-02/101854**   **JP-A- 10 188 952**
**JP-A- 2003 168 481**   **JP-A- 2008 103 294**
**JP-A- 2009 283 270**   **JP-B2- 2 869 156**
**US-A1- 2006 006 063**   **US-B1- 6 423 446**

# Description

## Technical Field

The present invention relates to an electrode plate used in a nonaqueous secondary battery typified by a lithium-ion cell and to a nonaqueous secondary battery using the same.

## Background Art

In recent years, lithium secondary batteries having been widely used as power supplies for portable electronic devices have a negative electrode made of a carbonic material or the like capable of occluding and releasing lithium, and a positive electrode made of an active material of a composite oxide containing a transition metal and lithium, e.g., $LiCoO_2$. A secondary battery with a high voltage and a high discharge capacity has thus been realized.

With the multi-functionalization of electronic and communication devices in recent years, there has been demand for further increasing the capacity of lithium secondary batteries.

As a measure taken to increase the capacity, forming of an electrode plate containing a larger amount of active material and having a uniform thickness has been discussed.

As a way to uniformize an electrode plate in thickness, a roll method and an application method are mainly used.

In a roll method described in, for example, Patent Literature 1, as shown in FIG. 14, a positive electrode composite material 101 in a wet state is supplied between heating rolls 100a and 100b and between heating rolls 100c and 100d. When the positive electrode composite material 101 in a wet state is formed into a sheet form, the heating rolls 100a to 100d heat the positive electrode composite material 101 to reduce the water content therein.

A sheet 102a formed by the heating rollers 100a and 100b passes through between the heating roll 100b and a pressure-bonding roll 103a and is supplied onto one of two surfaces of a current collector plate 104.

A sheet 102b formed by the heating rollers 100c and 100d passes through between the heating roll 100d and a pressure-bonding roll 103b and is supplied onto the other of the surfaces of the current collector plate 104. The sheets 102a and 102b supplied onto the two surfaces of the current collector plate 104 interposed between the sheets 102a and 102b pass through between the pressure-bonding rolls 103a and 103b and active material layers 105 are pressure-bonded to the two surfaces of the current collector plate 104.

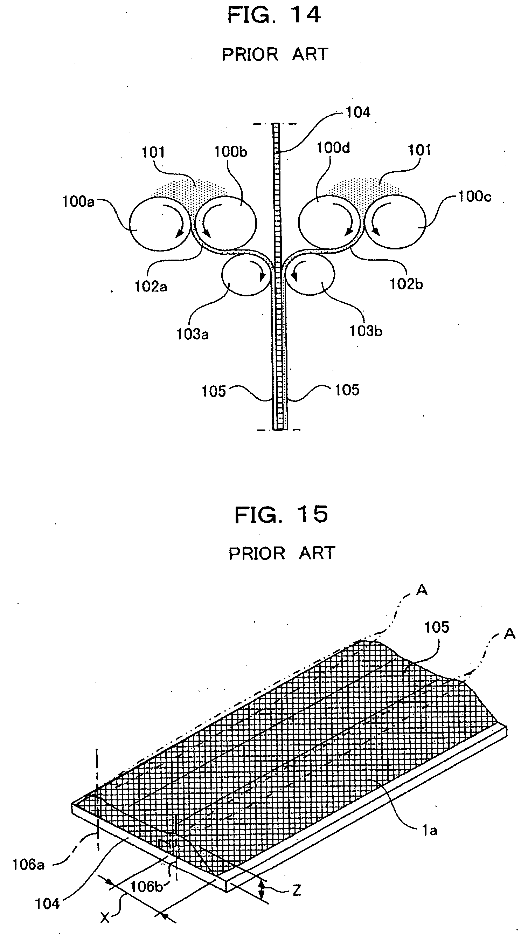

In an application method described, for example, in Patent Literature 2, a coating material in liquid form having a viscosity lower than that in the roll method is applied on a current collector plate and dried to form an active material layer 105. Specifically, in the case of application on the surface of a current collector plate 104 in strip form as shown in FIG. 15, a surface tension occurs on a composite coating material, so that an end portion 1a of a composite material layer 1 slopes gently (a slope in the thickness direction of about X/Z = 10) and a portion A protrudes at a corner portion. This shape is maintained even after drying, resulting in nonuniformity in thickness.

Then, the current collector plate 104 on which the active material layer 105 is laminated is cut with a slitter (not shown) along cutting lines 106a and 106b where the portion A can be removed, in the longitudinal direction of the current collector plate 104.

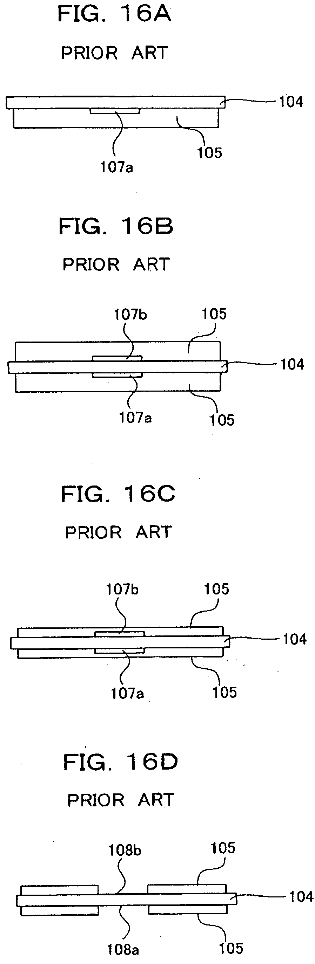

Because an exposed surface (a plain portion described below) of the current collector plate 104 and a corner portion in the longitudinal direction of the active material layer 105 laminated on the current collector plate 104 are cut and removed with a slitter as described above, the plain portion where the surface of the current collector plate 104 is exposed is formed at or in the vicinity of the end portion of an electrode plate in the longitudinal direction in order to form a battery by connecting the current collector plate 104 of the electrode plate to a sealing plate functioning as positive output or to a battery case functioning as a negative electrode. Specifically, a masking tape 107a is applied on the current collector plate 104, as shown in FIG. 16(a), and the active material layer 105 is coated thereon.

As shown in FIG. 16(b), a masking tape 107b is also applied on the other surface of the current collector plate 104 and another active material layer 105 is coated thereon.

Referring to FIG. 16(c), rolling is performed with a roll press.

Thereafter, as shown in FIG. 16(d), the masking tapes 107a and 107b are separated to form plain portions 108a and 108b so as to have a uniform thickness even in an end portion.

## Citation list

### Patent Literatures

Patent Literature 1: Japanese Patent No. 2869156
Patent Literature 2: Japanese Patent Laid-Open No. 2005-183181

## Summary of Invention

### Technical Problem

In the case of the roll method according to Patent Literature 1, however, it is difficult to dry the positive electrode composite material 101 on the heating rolls 100a to 100d between which the positive electrode composite material passes through in several minutes, for application to a nonaqueous secondary battery such as a lithium-ion cell made by mainly using a solvent such as N-methyl-2-pyrrolidone having a high boiling point and high wettability. The positive electrode composite material 101 is therefore pressure-bonded to the current collector plate 104 while being in a wet state to cause breaks in the active material layers 105 laminated on the current collector plate 104 or partial attachment of the active material layers 105 on the current collector plate 104, thereby causing a nonuniformity in film thickness. Thus, the charge/discharge capacity of the nonaqueous secondary battery is reduced.

On the other hand, the application method according to Patent Literature 2 has a problem that the active material layers 105 are separated around the boundaries between the active material layers 105 on the masking tapes 107a and 107b and the active material layers 105 firmly bonded by a binder to active material layers 203 on the electrode plate, when the masking tapes 107a and 107b are separated. In a case where a nonaqueous secondary battery is formed by using the thus-formed electrode plate as a positive electrode plate or a negative electrode plate and by immersing in an electrolytic solution the positive and negative electrode plates opposed to each other with a separator interposed therebetween, there is a risk that a separated or almost separated chip of the active material layer 105 breaks through the separator to cause an internal short circuit.

Further, if a fluorinated resin having high repellency to a liquid is used in order to secure the releasability of the masking tapes 107a and 107b, there is a risk of including air bubbles in the active material layers 105 due to the repellency. Consequently, the active material layers 105 having gaps formed therein after drying are depressed by pressing to have nonuniform films.

An object of the present invention is to provide an electrode plate that can hold a larger amount of an active material and have a uniform composite material layer in thickness.

**Solution to Problem**

Preferably, the nonaqueous secondary battery electrode plate includes a positive electrode plate having a composite lithium oxide as an active material, and a negative electrode plate having as an active material a material capable of retaining lithium, the positive electrode plate and the negative electrode plate being opposed to each other with a separator interposed therebetween and being immersed in an electrolytic solution containing a nonaqueous solvent. The positive electrode plate or the negative electrode plate is formed by laminating the composite material layer of the active material on a surface of a current collector plate. A slope in a thickness direction (X/Z) of the end surfaces of the composite material layer along the longer sides of the current collector plate is "$0 < (X/Z) <= 1$". Preferably, the slope in the thickness direction (X/Z) of the end surfaces of the composite material layer along the longer sides of the current collector plate is "$0.2 <= (X/Z) <= 1$".

The positive electrode plate is formed by laminating on the current collector plate a positive electrode composite coating material prepared by kneading and dispersing in a nonaqueous dispersion medium an active material including at least a lithium-containing composite oxide, an electroconductive material and a non-water-soluble high polymer binder. The proportion by volume of the active material, the binder and the electroconductive material is such that the binder is "10" or less and the electroconductive material is "10" or less with respect to "100" of the active material.

The negative electrode plate is formed by laminating on the current collector plate a negative electrode composite coating material prepared by kneading and dispersing in a dispersion medium an active material including at least a material capable of retaining lithium, and a water-soluble high polymer binder.

The positive electrode plate or the negative electrode plate has the composite material layer laminated on the current collector plate so that plain portions where a surface of the current collector plate is exposed from the ends along the longer sides of the current collector plate are left.

The positive electrode plate or the negative electrode plate has the composite material layer laminated from the ends along the longer sides of the current collector plate.

A method of manufacturing a nonaqueous secondary battery electrode plate according to the present invention is defined in claim 1. The thickness of the composite material layer film is shaped at such a compression ratio that when the film thickness of the composite material layer film after the first step is "1", the film thickness after the second step is "not smaller than 0.4 and not larger than 0.6", and the film thickness after the third step is "not larger than 0.2".

When surface roughness Ra of the first and second rolls and the current collector plate is the surface roughness of the first roll: a1, the surface roughness of the second roll: a2, and the surface roughness of the current collector plate: a3, "a1 > a2 > a3".

The mixing of the active material, the solvent and the binder soluble in the solvent or the mixing of the active material, the solvent, the binder soluble in the solvent and the electroconductive material is performed in kneading by a kneading extruder.

The composite material layer with a constant width in the longitudinal direction may be removed before the drying in the third step to form a plain portion.

Advantageous Effects of Invention

In the nonaqueous secondary battery electrode plate thus constructed, the composite material layer of the active material is laminated on the surface of the current collector plate so that the slope in the thickness direction (X/Z) of the end surfaces of the composite material layer along the longer sides of the current collector plate is "0 < (X/Z) ≤ 1". Thus an electrode plate having a uniform thickness and a nonaqueous secondary battery having high capacity can be realized.

Brief Description of the Drawings

FIG. 1 is a perspective view of an essential portion of an apparatus for manufacturing a nonaqueous secondary battery electrode plate in Embodiment 1 of the present invention;
FIG. 2 is an enlarged sectional view of the essential portion shown in FIG. 1;
FIG. 3 is an enlarged perspective view of the electrode plate in Embodiment 1;
FIG. 4 is a partially cutaway perspective view of a cylindrical secondary battery;
FIG. 5 is a diagram schematically showing a die in Embodiment 1;
FIG. 6 is a sectional view taken along a direction perpendicular to the lengthwise direction of the electrode plate in Embodiment 1;
FIG. 7 is a sectional view taken along a direction perpendicular to the lengthwise direction of an electrode plate in a comparative example;
FIG. 8 is a partially cutaway perspective view of a nonaqeuous secondary battery in Embodiment 2 of the present invention;
FIG. 9 is an enlarged perspective view of an electrode plate in Embodiment 2;
FIG. 10 is a partially cutaway perspective view of a nonaqeuous secondary battery in Embodiment 3 of the present invention;
FIG. 11 is an enlarged perspective view of an electrode plate in Embodiment 3;
FIG. 12 is an enlarged perspective view of an essential portion of an apparatus for manufacturing the electrode plate in Embodiment 3;
FIG. 13 is a perspective view of an essential portion of an apparatus for manufacturing a nonaqueous secondary battery electrode plate in Embodiment 4 of the present invention;
FIG. 14 is a diagram showing the configuration of an apparatus for manufacturing an electrode plate in the conventional art;
FIG. 15 is an enlarged perspective view of the electrode plate in the conventional art;
FIG. 16 is a diagram for explaining the method of manufacturing the electrode plate in the conventional art;
FIG. 17 shows a sectional view of the electrode plate in Embodiment 1 and a plan view of the electrode plate disassembled from a battery configured by using the electrode plate; and
FIG. 18 is a diagram showing the results of an experiment on the electrode plate area ratio A/(A + B) of a portion impregnated with an electrolytic solution with respect to a slope (X/Z) of a composite material layer.

Description of Embodiments

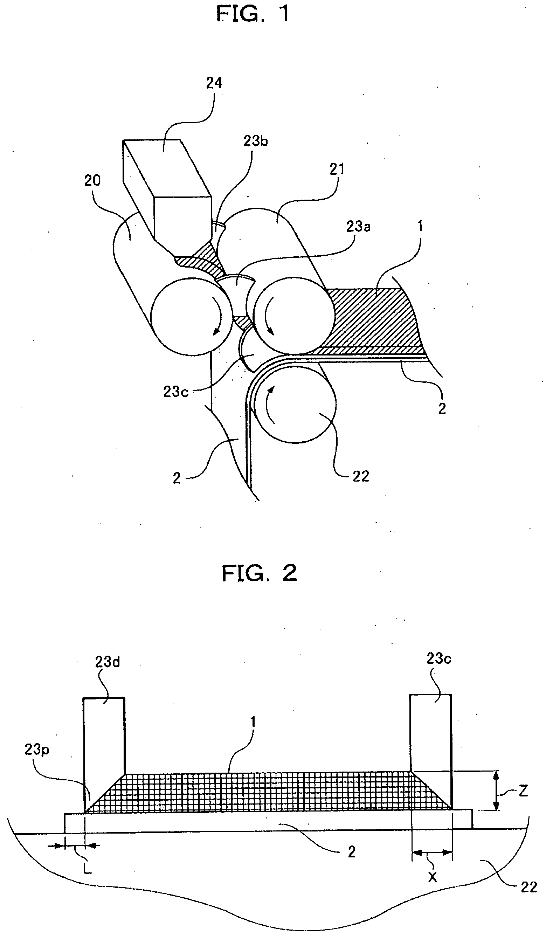

Embodiments of the present invention will be described below with reference to FIGS. 1 to 13, 17, and 18.

(Embodiment 1)

FIGS. 1 to 6 show Embodiment 1 of the present invention.

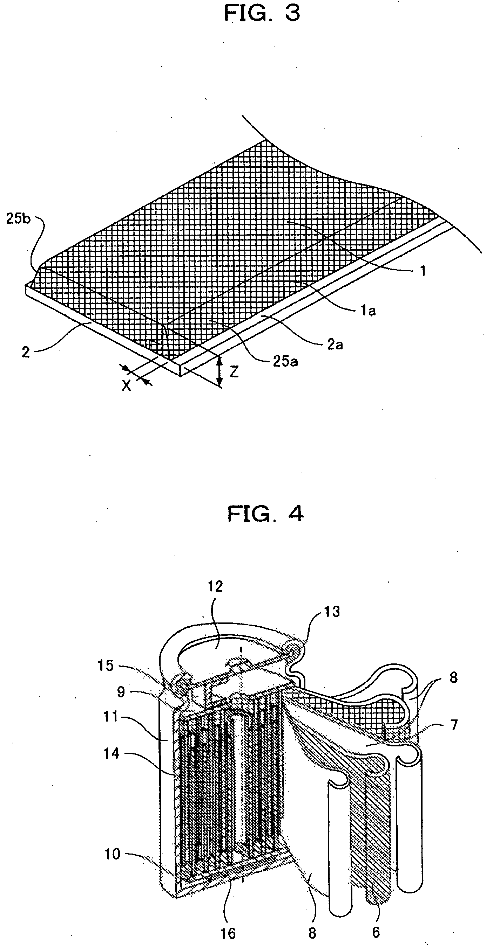

FIG. 4 shows a nonaqueous secondary battery using a nonaqueous secondary battery electrode plate according to the present invention. The nonaqueous secondary battery is assembled by a procedure described below.
First, an electrode group 14 is made by winding in spiral form a positive electrode plate 6 having a composite lithium oxide as an active material and a negative electrode plate 7 having as an active material a material capable of retaining lithium, with a separator 8 interposed between the positive electrode plate 6 and the negative electrode plate 7.
Next, the electrode group 14 is housed in a battery case 11 in the form of a cylindrical tube closed at its bottom. Thus, a negative electrode current collector plate 10 connected to the lower portion of the electrode group 14 is connected to the bottom portion of the battery case 11 by a negative electrode lead 16.
Next, a positive electrode current collector plate 9 connected to the upper portion of the electrode group 14 is connected to a sealing plate 12 by a positive electrode lead 15.
An electrolytic solution (not shown) composed of a predetermined quantity of a nonaqueous solvent is injected into the battery case 11. The sealing plate 12 having a sealing gasket 13 attached to the peripheral end portion thereof is thereafter inserted in an opening portion of the battery case 11, and the opening portion of the battery case 11 is inwardly bent for caulk sealing.
In the above-described electrolytic solution, various lithium compounds such as $LiPF_6$ and $LiBF_4$ may be used as an electrolytic salt. As the solvent, one of ethylene carbonate (EC), dimethyl carbonate (DMC), diethyl carbonate (DEC) and methylethyl carbonate (MEC) or a combination of these compounds may be used. Further, it is preferable to use vinylene carbonate (VC), cyclohexyl benzene or a compound obtained by modifying them in order to form a good film on the positive electrode plate 6 or the negative electrode plate 7 and ensure stability in the event of overcharge.
The separator 8 is not particularly specified as long as it has such a composition as to endure within the range of use of the lithium-ion secondary battery. However, a microporous film of an olefin resin such as polyethylene or polypropylene is ordinarily used singly or in composite form for the separator 8, and is a preferable form. The thickness of the separator 8, not particularly specified, may be set to 10 to 25 $\mu$m.

The positive electrode plate 6 and the negative electrode plate 7 are identical in structure to each other and are made by the same method, while only the active materials therein are different from each other. Only the method of manufacturing the positive electrode plate 6 will therefore be described.

For a current collector plate 2 for the positive electrode plate 6, a metal foil having a thickness of 5 $\mu$m to 30 $\mu$m and formed of aluminum, an aluminum alloy, nickel, or a nickel alloy is used. As a composite material applied on the current collector plate 2, a wet composite material is made in the form of clay with a viscosity of 1000 Pa·s or more by mixing, dispersing and kneading a positive electrode active material, an electroconductive material and a binder or an electroconductive material by a disperser such as a planetary mixer or an extruder so that they are uniformly dispersed in a dispersion medium.

Examples of the positive electrode active material include composite oxides such as a lithium cobalt oxide, a compound obtained by modifying the same (e.g., a compound obtained by solid-solving aluminum or magnesium in a lithium cobalt oxide), a lithium nickel oxide, a compound obtained by modifying the same (e.g., a compound obtained by replacing part of nickel with cobalt), a lithium manganese oxide and a compound obtained by modifying the same.

As the electroconductive material at this time, one of carbon blacks such as acetylene black, Ketjen black, channel black, furnace black, lamp black and thermal black, and various graphites or a combination of these may be used.

As the binder for the positive electrode at this time, polyvinylidene fluoride (PVdF), a compound obtained by modifying the same, polytetrafluoroethylene (PTFE) or a thermoplastic resin such as a rubber particle binder having an acrylate unit may be used. In such a binder, an acrylate monomer having a reactive functional group introduced thereinto or an acrylate oligomer may be mixed. As the solvent for the positive electrode, a nonaqueous solvent such as N-methyl pyrrolidone may be used.

FIG. 1 shows an electrode plate manufacturing apparatus.

In a first step, this positive electrode composite material is continuously extruded with a constant width and a constant thickness from a die 24 onto a roll 20 (surface roughness Ra = high) under an extruding pressure of a kneading extruder or a gear pump. The positive electrode composite material extruded onto the roll 20 is extruded onto a surface of the current collector plate 2. The viscosity of the wet positive electrode composite material in the form of clay is set to 1000 Pa·s or more, which is the most suitable viscosity for the positive electrode composite material to be properly pressure-bonded to the surface of the current collector plate 2. An arrow shown on the end surface of the roll 20 indicates the direction of rotation of the roll 20.

In a second step, the positive electrode composite material extruded onto the roll 20 is rolled between the roll 20 and a roll 21 disposed in opposition to the roll 20 and having a surface roughness smoother than that of the roll 20 (surface roughness Ra = medium), so as to have a constant thickness. If the thickness of the film of a composite material layer 1 made in the first step is "1", the material is rolled by the roll 20 and the roll 21 until the thickness becomes not smaller than 0.4 and not larger than 0.6, specifically, 1 mm or less.

At this time, the end surfaces of the positive electrode composite material supplied onto the surface of the current collector plate 2 are formed by regulator plates 23a and 23b disposed between the roll 20 and the roll 21 at opposite ends of the roll 20 and the roll 21 and by regulator plates 23c and 23d (not shown in FIG. 1; see FIG. 2) disposed between the roll 21 and the current collector plate 2 at opposite ends of the roll 21 so that the slopes of the end surfaces are within the range of specified values. FIG. 2 shows a cross section of the composite material layer 1 passing through between the regulator plates 21c and 23d.

The roll 20 in the second step has, due to its surface roughness, a smaller area of contact with the film of the composite material layer 1 and higher releasability than the roll 21 having medium surface roughness. Accordingly, transfer from the roll 20 having "high" surface roughness to the roll 21 having "medium" surface roughness accompanying the shaping of the film of the composite material layer 1 is performed.

If the composite material layer 1 is compressed to have a thickness smaller than "0.4" with respect to the thickness 1 of the film of the composite material layer 1 made in the first step, a pressure acting on the stretch of the film of the composite material layer 1 abnormally increases; both adhesion to the roll 20 having "high" surface roughness and adhesion to the roll 21 having "medium" surface roughness increase; and the film of the composite material layer 1 adheres both to the roll 20 and to the roll 21, resulting in a rupture of the film of the composite material layer 1.

In a third step, the positive electrode composite material having passed the regulator plates 23a, 23b, 23c, and 23d is supplied between the roll 21 and the current collector plate 2. An arrow shown on the end surface of the roll 22 indicates the direction of rotation of the roll 22. The current collector plate 2 is transported by the roll 22.

The roll 21 having medium surface roughness has, due to its surface roughness, a smaller area of contact with the film of the composite material layer 1 and higher releasability than the current collector plate 2. Accordingly, the composite material layer 1 is pressure-bonded to and laminated on the current collector plate 2 having higher adhesion to the film of the wet composite material layer 1 than that to the roll 21, by the roll 22 opposed to the roll 21.

Subsequently, drying is performed by a hot-air drying furnace or the like to complete the positive electrode plate 6 having the composite material layer 1 adhered onto the current collector plate 2.

The most suitable viscosity of the composite material in the first step is 1000 Pa·s or more where the suitably formed shape can be maintained. Due to ease of dispersing and kneading with a planetary mixer or an extruder, extruding of the film of the composite material layer 1 with the die 24 and shaping with the high-surface-roughness roll 20, the medium-surface-roughness roll 21 and the roll 22, it is desirable that the viscosity is equal to or lower than 50000 Pa·s.

FIG. 3 shows an enlarged perspective view of the completed positive electrode plate 6 in strip form.

Tips 23p of the regulator plates 23c and 23d are set in contact with the current collector plate 2 at a distance of L inward from the sides along the longitudinal direction of the current collector plate 2. Two end surfaces 25a and 25b of the composite material layer 1 along the longitudinal direction of the current collector plate 2 in the positive electrode plate 6 have, as a result of formation with the regulator plates 23a, 23b, 23c, and 23d during the rolling in the second step, a slope (X/Z) in the thickness direction as expressed by

$$0 < (X/Z) \leq 1$$

where Z is the thickness of the end surface of the composite material layer 1 and X is a distance between a perpendicular from the end of the surface of the composite material layer 1 to the current collector plate 2 and the edge of the end surface of the composite material layer 1.

Thus, in the case of manufacture of the positive electrode plate 6 retaining a larger amount of an active material and having the increased thickness Z for the purpose of manufacturing a high-capacity nonaqueous secondary battery, a favorable positive electrode plate 6 can be obtained by shaping the slope profiles of the end surfaces 25a and 25b of the composite material layer 1 contacting plain portions 2a of the current collector plate 2 with the regulator plates 23a, 23b, 23c, and 23d, without executing operations processes such as removing an unnecessary portion with a slitter in a separate process or applying a masking tape on a portion to be formed as the plain portion 2a of the current collector plate 2 before the application of the positive electrode composite coating material and separating the masking tape after the completion of the application of the positive electrode composite coating material.

On the other hand, in the preparation of the negative electrode plate 7, a metal foil having a thickness of 5 μm to 25 μm and formed of copper or a copper alloy may be used as the current collector plate 2. The composite material in the case of the negative electrode plate 7 is made by mixing and dispersing in a dispersion medium a negative electrode active material, a binder and, if necessary, an electroconductive material and a viscosity increasing agent by use of a disperser such as a planetary mixer or an extruder.

As the negative electrode active material, various natural graphite, artificial graphite, silicon-based composite materials such as silicide and various alloy composition materials may be used. As the negative electrode binder at this time, various binders including PVdF and a compound obtained by modifying the same may be used. From the viewpoint of improvement in the lithium ion receptivity, however, it can be said more preferable to use in combination or add a small amount of a cellulose resin or the like, e.g., carboxymethyl cellulose (CMC) to styrene-butadiene copolymer rubber particles (SBR) and a material obtained by modifying the same.

As the solvent for the negative electrode, a nonaqueous solvent such as N-methyl pyrrolidone and an aqueous solvent may be used.

The invention will be described in more details with respect to specific examples thereof.

(Example 1)

2 cc (10 g) of lithium cobalt oxide as a positive electrode active material, 0.9 cc (2 g) of acetylene black as an electroconductive material and 25 cc (25 g) of a binder solution prepared by diluting a PVdF powder with N-methyl pyrrolidone to 8% were first mixed and agitated for 30 minutes at a rate of 3000 rpm with a disperser. 18 cc (90 g) of lithium cobalt oxide was thereafter added and the mixture was dispersed and kneaded for 30 minutes with a planetary mixer until its viscosity became 40 kPa·s. A positive electrode composite coating material was thus obtained.

In this case, the total amount of the active material was the sum of 2 cc of lithium cobalt oxide and 18 cc of lithium cobalt oxide, i.e., 20 cc; the amount of the binder was 25 cc x 0.08, i.e., 2 cc; and the amount of the electroconductive material was 0.9 cc. Finally, a favorable result was obtained when the proportion by volume of the binder was "10" or less to "100" by volume of the active material and when the proportion by volume of the electroconductive material was "10" or less to the proportion "100" by volume of the active material. The amount of the binder is sufficient for bonding the film when the proportion is "10". A surplus amount of the binder beyond this value is unnecessary. If the amount of the electroconductive material is smaller than "4.5", the electroconductivity is so low that a desired function cannot be performed.

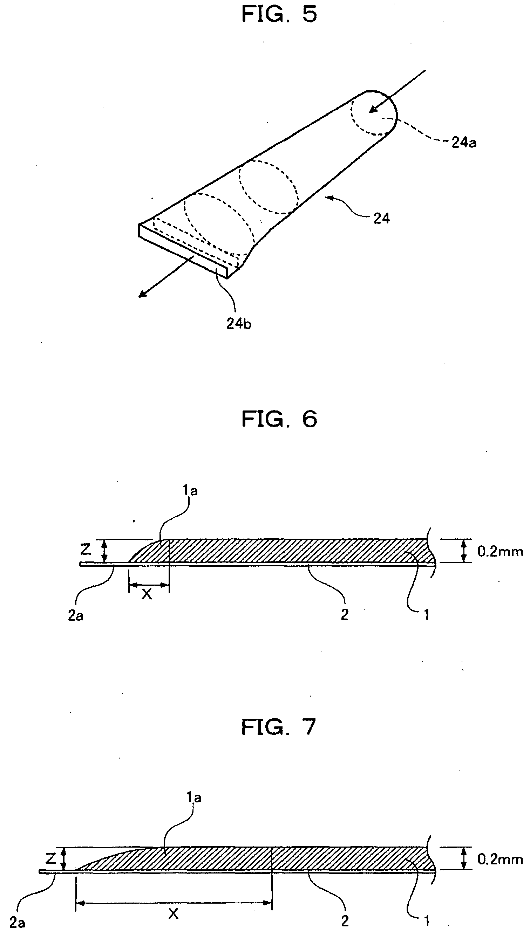

Next, in the first step, the positive electrode composite material was pressurized by extrusion at 50N in the direction of the arrow in FIG. 5 using the die 24 having a straight passage. The straight passage changes gradually in shape from an inlet 24a in a cylindrical form to an outlet 24b in a laterally-extended rectangular tubular form as shown in FIG. 5, and has a low passage resistance. A film of the composite material layer 1 having a thickness of 1.5 mm and a width of 25 mm was thus extruded onto the roll 20 having "high" surface roughness Ra (Ra = 0.55 µm).

Next, in the second step, the regulator plates 23a and 23b were set at intervals of 30 mm on the roll 21 having "medium" surface roughness Ra (Ra = 0.24 µm) ; the roll 20 and the roll 21 were fixed so as to oppose each other with a constant gap spacing of 0.75 mm set therebetween so that the thickness of the composite material layer 1 was 0.8 mm; and the composite material layer 1 was transferred onto the roll 21.

Next, in the third step, the regulator plates 23c and 23d were set at intervals of 30 mm on the roll 21; the roll 22 was fixed so as to be opposed to the roll 21 with a constant gap spacing of 0.18 mm set therebetween; and the film of the composite material layer 1 was pressure-bonded and rolled in the longitudinal direction to the current collector plate 2 formed of aluminum foil having a thickness of 15 µm and "low" surface roughness Ra (Ra = 0.17 µm) on the roll 22 while the dimension in the width direction is regulated with the regulator plates 23c and 23d, the thickness of the composite material layer 1 being set to 0.2 mm. A positive electrode plate was obtained, as a nonaqueous secondary battery electrode plate in Embodiment 1, by this rolling and drying at 80°C in a hot-air drying furnace. FIG. 6 shows a sectional view of an end portion 1a on two longer sides of the nonaqueous secondary battery electrode plate in Embodiment 1.

(Comparative Example 1)

2 cc (10 g) of lithium cobalt oxide as a positive electrode active material, 0.9 cc (2 g) of acetylene black as an electroconductive material, 25 cc (25 g) of a binder solution prepared by diluting a PVdF powder with N-methyl pyrrolidone to 8% and 23 cc (23 g) of N-methyl pyrrolidone were first mixed and agitated by a disperser for 30 minutes at a rate of 3000 rpm. 18 cc (90 g) of lithium cobalt oxide was thereafter added and the mixture was dispersed and kneaded for 30 minutes with a planetary mixer until the viscosity became 10 Pa·s. A positive electrode composite coating material was thus obtained.

Next, the positive electrode composite coating material was applied on 15 µm aluminum foil by a die to have a film thickness of 0.4 mm and dried at 80°C. The thickness of the composite material layer 1 was set to 0.2 mm. A positive electrode plate 6 was thus obtained as a nonaqueous secondary battery electrode plate in Comparative Example 1.

FIG. 7 shows a sectional view of the end portion 1a on each of two longer sides of the nonaqueous secondary battery electrode plate in Comparative Example 1.

A comparison will be made between the positive electrode plate 6 of Example 1 shown in FIG. 6 and the positive electrode plate 6 of Comparative Example 1 shown in FIG. 7.

Each of the end portions 25a and 25b of the composite material layer 1 contacting the plain portion 2a of the current collector plate in the positive electrode plate 6 shown in FIG. 6 is uniform in thickness to the end portion 1a of the composite material layer 1 on each of the two longer sides of the electrode plate and has a slope (X/Z) of (1/1), so that the electrode group can be wound without any gap associated with a variation in the thickness of the electrode plate to form a battery as shown in FIG. 4, thereby realizing a battery of high capacity with improved safety.

On the other hand, in the case of the positive electrode plate 6 having the coating material applied thereon with a die, the coating material exhibiting liquid behavior at a viscosity of 10 Pa·s protrudes due to a surface tension in the end portion of the composite material layer 1 contacting the plain portion 2a of the current collector plate in the positive electrode plate 6 shown in FIG. 7, and the protrusion remains even after drying. As a result, the slope (X/Z) is about "5 to 6" and a protrusion exists at the vertex of the end portion 1a of the composite material layer. In a case where the electrode group is formed by using the positive electrode plate 6 in Comparative Example 1, gaps are formed in association with variations in the thickness of the electrode plate to reduce the amount of the filled active material per unit volume contributing to the charge/discharge of lithium ions. As a result, it is difficult to provide a battery of high capacity. A portion of the electrode plate end portion increased in thickness due to a surface tension may be removed by slitting or the like, and an electrode plate may be formed by the other portion uniform in thickness. However, the composite material layer inevitably comes off at the time of slitting, and the composite material layer partly attaches to and remains on the electrode plate end portion when the composite material layer comes off. There is concern that such a chip of the composite material layer may pierce the separator 8 in the battery to cause an internal short circuit. Further, a material of a higher surface tension may be rounded in the end portion thereof so that the slope (X/Z) is "2 to 4". However, needless to say, the electrode plate end portion protrudes due to the higher surface tension, so that the thickness of the electrode plate end portion is larger than that shown in Comparative Example 1. The thickness of the electrode plate end portion may be larger than that in Comparative Example 1, thereby further reducing the amount of the filled active material. It is desirable that the slope (X/Z) be (1/1) or less. If X is infinitely closer to "0", the volume of the composite material layer 1 can be maximized. Accordingly, the amount of the filled active material can be maximized. Conversely, if X becomes minus, the end portion 1a is inwardly recessed and the volume of the composite material layer 1 is reduced. It is therefore desirable that $0 \leq$

X. Consequently, it is also desirable that the slope (X/Z) satisfy "$0 \leq (X/Z)$".

(Embodiment 2)

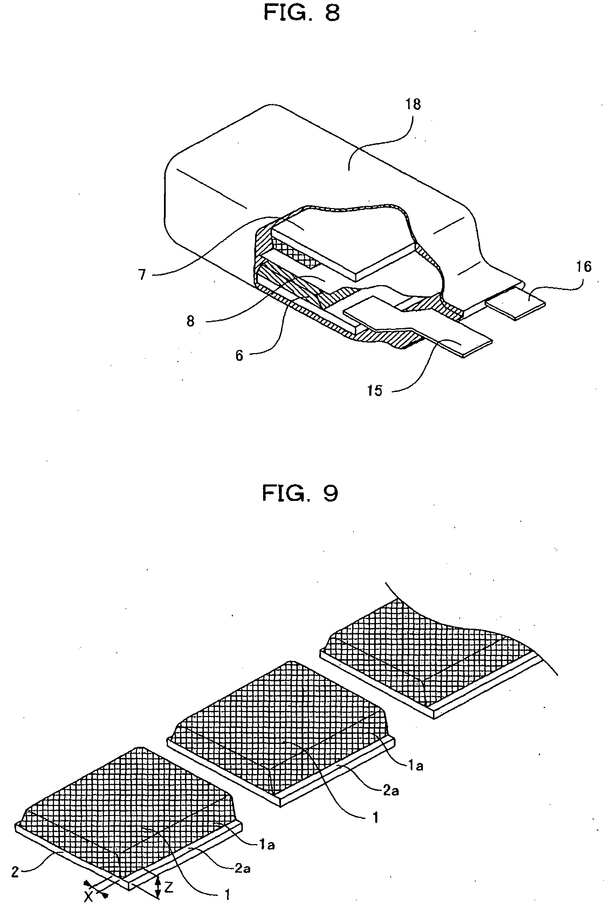

FIGS. 8 and 9 show Embodiment 2 of the present invention.

In Embodiment 1, a battery is formed by winding the positive electrode plate 6 and the negative electrode plate 7 in spiral form with the separator 8 interposed therebetween and housing them in the battery case 11. However, the electrode plate made in Embodiment 1 as the positive electrode plate 6 or the negative electrode plate 7 can also be used in a battery in which, as shown in FIG. 8, a positive electrode plate 6 having a composite lithium oxide as an active material and a negative electrode plate 7 having as an active material a material capable of retaining lithium are stacked one on top of another with a separator 8 interposed therebetween, and an opening of a laminate container 18 aluminum foil-laminated with an insulating resin is sealed by ultrasonic welding while one end of a positive electrode lead 15 and one end of a negative electrode lead 16 are led to the outside, the positive electrode lead 15 having the other end connected to the positive electrode plate 6 and the negative electrode lead 16 having the other end connected to the negative electrode plate 7.

In this case, each electrode plate is made by cutting the lengthwise electrode plate made in Embodiment 1 into pieces of required length in the lengthwise direction thereof, as shown in FIG. 9.

(Embodiment 3)

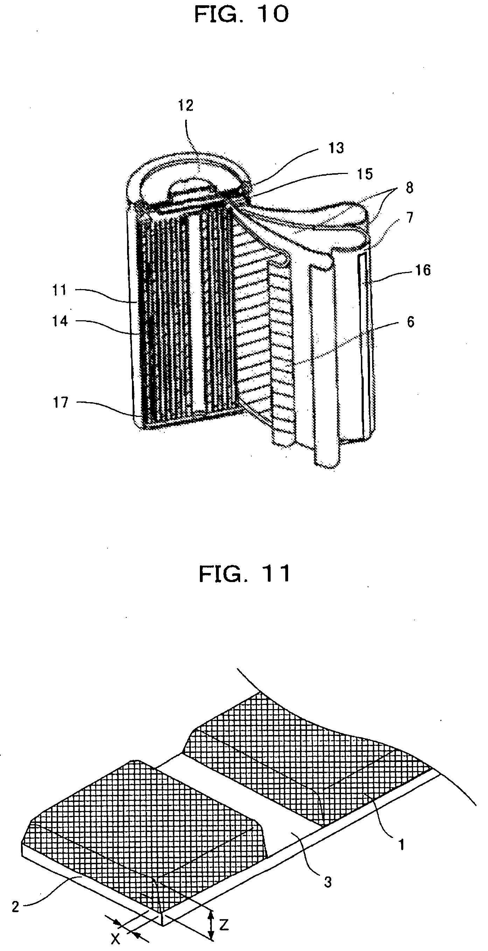

FIGS. 10 to 12 show Embodiment 3 of the present invention.

In Embodiment 1, the plain portions 2a and 2b where the composite material layer 1 is not laminated and the surface of the current collector plate 2 in the electrode plate is exposed, are formed in the current collector plate 2 on the sides of the same along the longitudinal direction of the same, the electrode plate forming the positive electrode plate 6 and the negative electrode plate 7. This is applicable to an electrode plate of a battery shown in FIG. 10.

In this battery using an electrode plate not provided with plain portions, an electrode group 14 is made by winding in spiral form a positive electrode plate 6 having a composite lithium oxide as an active material and a negative electrode plate 7 having a material capable of retaining lithium as an active material, with a separator 8 interposed therebetween.

Next, the electrode group 14 is housed with an insulating plate 17 in a battery case 11 in the form of a cylindrical tube closed at the bottom thereof. A negative electrode lead 16 led out from the lower portion of the electrode group 14 is thus connected to the bottom portion of the battery case 11.

Next, a positive electrode lead 15 led out from the upper portion of the electrode group 14 is connected to a sealing plate 12.

An electrolytic solution (not shown) composed ob a predetermined quantity of a nonaqueous solvent is injected into the battery case 11. The sealing plate 12 having a sealing gasket 13 attached to the peripheral end portion thereof is thereafter inserted in the opening portion of the battery case 11, and the opening portion of the battery case 11 is inwardly bent for caulk sealing.

FIG. 11 shows the electrode plate in this case. A plain portion 3 is formed in the width direction of a current collector plate 2 in the vicinity of the end portion of the electrode plate. The plain portion 3 is connected to the sealing plate 12 by the positive electrode lead 15 in the case of the positive electrode plate 6. The plain portion 3 is connected to the battery case 11 by the negative electrode lead 16 in the case of the negative electrode plate 7.

The same advantage as that of the electrode plate having plain portions along the longer sides thereof shown in FIG. 3 can be expected when a composite material layer 1 is formed such that the slope in the thickness direction (X/Z) of the end surfaces along the longer sides of the current collector plate 2 satisfies "$0 < (X/Z) \leq 1$".

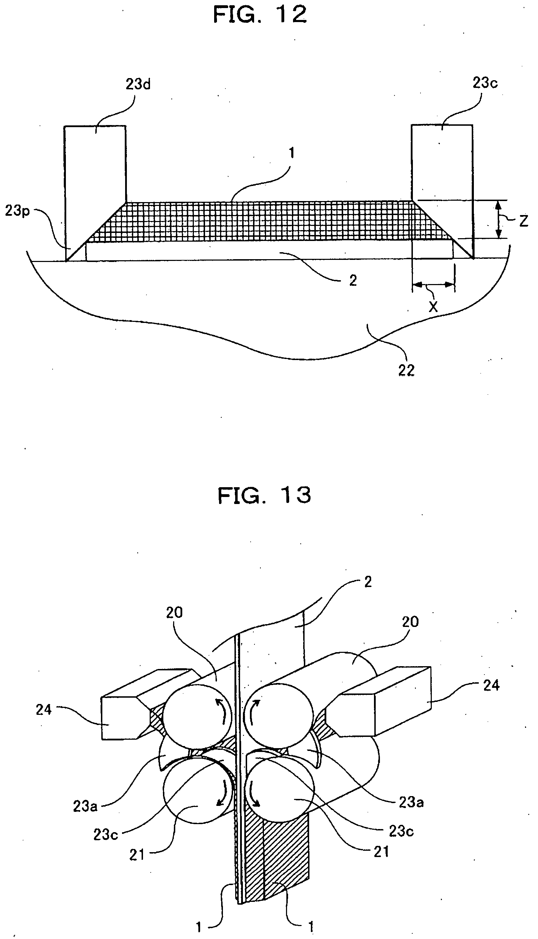

The electrode plate shown in FIG. 11 can be made by the manufacturing apparatus shown in FIG. 1, as described below. Specifically, as shown in FIG. 12, tips 23p of regulator plates 23c and 23d are brought into direct contact with the surface of a roll 22, and the current collector plate 2 is brought into contact with sloped surfaces 23r of the regulator plates 23c and 23d. In this state, the current collector plate 2 is transported. To form the plain portion 3 to which the positive electrode lead 15 or the negative electrode lead 16 is connected, a portion of the composite material layer 1 laminated on the current collector plate 2 is removed with a scraping plate or a suction nozzle before drying such that the surface of the current collector plate 2 is exposed.

(Embodiment 4)

In the embodiments described above, the composite material layer 1 is formed on one surface of the current collector plate 2 in the electrode plate such that the slope in the thickness direction (X/Z) of the end surfaces along the longer sides of the current collector plate 2 satisfies "$0 < (X/Z) \leq 1$". However, the composite material layers 1 can be formed at a time on both surfaces of the current collector plate 2 by using a manufacturing apparatus shown in FIG. 13.

In the manufacturing apparatus shown in FIG. 13, a die 24, rollers 20 and 21 and regulator plates 23a to 23d are disposed in the same way as shown in FIG. 1 on each side of the current collector plate 2 transported downward from above to simultaneously perform the same processes including the first to third steps on each side of the current collector plate 2 and drying, thereby forming composite material layers 1 on both surfaces of the current collector plate 2.

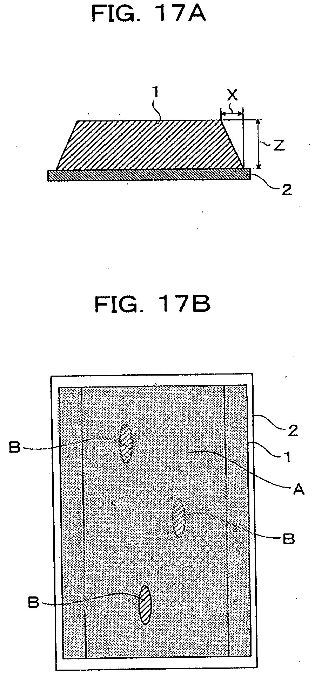

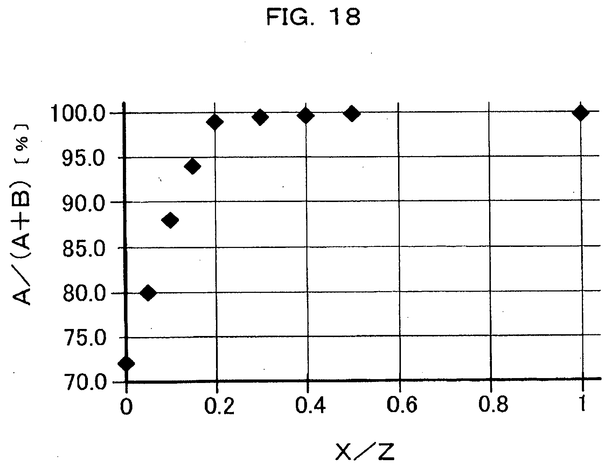

In the above-described embodiments, the slope in the thickness direction (X/Z) of the end surfaces along the longer sides of the current collector plate in the composite material layer formed on the surface of the current collector plate is preferably "0 < (X/Z) ≤ 1". More preferably, the slope (X/Z) is "0.2 ≤ (X/Z) ≤ 1". In the battery manufacturing process, if the electrolytic solution is injected through the side end surface of the electrode plate to permeate the electrode plate, the permeability of the electrolytic solution to the entire electrode plate is higher when "0.2 ≤ (X/Z) ≤ 1" than when "0 < (X/Z) < 0.2". When "0.2 ≤ (X/Z) ≤ 1", charge/discharge reaction nonuniformity in the electrode plate is reduced and the life property is improved. Therefore such a condition is preferable. Experimentally, electrode plates shown in FIGS. 17(a) and 17(b), in which the slope (X/Z) was changed in the range from 0 to 1, were used in a plurality of batteries and were impregnated with an electrolytic solution by injecting the electrolytic solution through the side end surface of the electrode plate. After the impregnation with the electrolytic solution, the batteries were disassembled and a portion A impregnated with the electrolytic solution and a portion B not impregnated with the electrolytic solution were examined. The electrode plate area ratio A/(A + B) of the portion impregnated with the electrolytic solution was computed for each electrode. FIG. 18 shows the results of this computation.

As can be understood from FIG. 18, the number of portions B not impregnated with the electrolytic solution was large in the range of "0 < (X/Z) < 0.2" and the electrode plate area ratio of the portion impregnated with the electrolytic solution was about 72.0% to slightly less than 99% in this range. In contrast, in the range of "0.2 ≤ (X/Z) ≤ 1", the proportion of portions B not impregnated with the electrolytic solution was 99.0% to 99.9% and the permeation of the electrolytic solution was remarkably good.

The slopes (X/Z) of the two end surfaces are equally set to 45° as shown in FIG. 2, the slope of one of the end surfaces and the slope of the other may differ from each other if the slope is within the range of "0 < (X/Z) ≤ 1", more preferably within the range "0.2 ≤ (X/Z) ≤ 1".

Industrial Applicability

The present invention can contribute to an improvement in safety and an increase in capacity of nonaqueous secondary batteries.

Reference Signs List

Z Distance between surface of composite material layer and current collector plate

X Distance from perpendicular extending from end of surface of composite material layer to the current collector plate
1 Composite material layer
1a End portion of composite material layer
2 Current collector plate
3 Plain portion
6 Positive electrode plate
7 Negative electrode plate
8 Separator
9 Positive electrode current collector plate
10 Negative electrode current collector plate
11 Battery case
12 Sealing plate
13 Gasket
14 Electrode group
15 Positive electrode lead
16 Negative electrode lead
17 Insulating plate
18 Laminate container
20, 21, 22 Roll
23a, 23b, 23c, 23d Regulator plate
24 Die

**Claims**

1. A method of manufacturing a nonaqueous secondary battery electrode plate, the method comprising, to form a composite material layer (1) on a current collector plate (2):

   **characterized by**
   a first step of forming a composite material layer film by continuously extruding, from a die (24) onto a first roll (20), a wet composite material in a form of a clay obtained by mixing an active material, a solvent and a binder soluble in the solvent or mixing an active material, a solvent, a binder soluble in the solvent and an electroconductive material;
   a second step of stretching the composite material layer film to have a constant width, while rolling the composite material layer film to have a constant thickness by a second roll (21) opposed to the first roll (20) on which the composite material layer film is put and shaping, with regulator plates (23a, 23b) set on the second roll (21), a slope in a thickness direction (X/Z) of end surfaces along longer sides of the current collector plate (2); and
   a third step of pressure-bonding the shaped composite material layer film to the current collector plate (2) by a third roll (22) opposed to the second roll (21), and drying the composite material layer film to form the composite material layer (1) on the current collector electrode (2).

**2.** The method according to claim 1, wherein the thickness of the composite material layer film is shaped at such a compression ratio that when the film thickness of the composite material layer film after the first step is "1",
the film thickness of the composite material layer film after the second step is "not smaller than 0.4 and not larger than 0.6"; and
the film thickness of the composite material layer film after the third step is "not larger than 0.2".

**3.** The method according to claim 1, wherein when surface roughness Ra of the first and second rolls and the current collector plate (2) is
the surface roughness of the first roll (20): a1
the surface roughness of the second roll (21): a2, and
the surface roughness of the current collector plate (2): a3,

$$a1 > a2 > a3.$$

**4.** The method according to claim 1, wherein the mixing of the active material, the solvent and the binder soluble in the solvent or the mixing of the active material, the solvent, the binder soluble in the solvent and the electroconductive material is performed in kneading by a kneading extruder.

**5.** The method according to claim 1, wherein the composite material layer (1) with a constant width in a longitudinal direction is removed before the drying in the third step to form a plain portion.

**6.** The method according to claim 1, wherein the nonaqueous secondary battery electrode plate comprising a positive electrode plate (6) having a composite lithium oxide as an active material, and a negative electrode plate (7) having as an active material a material capable of retaining lithium, the positive electrode plate (6) and the negative electrode plate (7) being opposed to each other with a separator (8) interposed therebetween and being immersed in an electrolytic solution containing a nonaqueous solvent,
wherein the positive electrode plate (6) or the negative electrode plate (7) is formed by laminating the composite material layer (1) of the active material on a surface of the current collector plate (2), and a slope in a thickness direction (X/Z) of end surfaces of the composite material layer (1) along longer sides of the current collector plate (2) is

$$0 < (X/Z) \leq 1$$

**7.** The method according to claim 6, wherein the slope in the thickness direction (X/Z) of the end surfaces of the composite material layer (1) along the longer sides of the current collector plate (2) is

$$0.2 \leq (X/Z) \leq 1$$

**8.** The method according to claim 6, wherein the positive electrode plate (6) is formed by laminating on the current collector plate (2) a positive electrode composite coating material prepared by kneading and dispersing in a nonaqueous dispersion medium an active material including at least a lithium-containing composite oxide, an electroconductive material and a non-water-soluble high polymer binder.

**9.** The method according to claim 6, wherein the negative electrode plate (7) is formed by laminating on the current collector plate (2) a negative electrode composite coating material prepared by kneading and dispersing in a dispersion medium an active material including at least a material capable of retaining lithium, and a water-soluble high polymer binder.

**10.** The method according to claim 8, wherein a proportion by volume of the active material, the binder and the electroconductive material is such that the binder is "10" or less and the electroconductive material is "10" or less with respect to "100" of the active material.

**11.** The method according to claim 6, wherein the positive electrode plate (6) or the negative electrode plate (7) has the composite material layer (1) laminated on the current collector plate (2) so that plain portions where a surface of the current collector plate (2) is exposed from ends along the longer sides of the collector plate are left.

**12.** The method according to claim 6, wherein the positive electrode plate (6) or the negative electrode plate (7) has the composite material layer (1) laminated from ends along the longer sides of the current collector plate (2).

**Patentansprüche**

**1.** Verfahren zur Herstellung einer Elektrodenplatte für eine nichtwässrige Sekundärbatterie, wobei das Verfahren das Bilden einer Verbundmaterialschicht (1) auf einer Stromsammelplatte (2) umfasst:

**gekennzeichnet durch**

einen ersten Schritt zum Bilden einer Schichtfolie aus Verbundmaterial **durch** kontinuierliches Extrudieren aus einer Düse (24) auf eine erste Walze (20) eines nassen Verbundmaterials in einer Form einer Masse, die man **durch** Mischen eines aktiven Materials, eines Lösungsmittels, eines in dem Lösungsmittel lösbaren Bindemittels und eines elektrisch leitenden Materials erhält,

einen zweiten Schritt zum Strecken der Schichtfolie aus Verbundmaterial, um eine konstante Breite aufzuweisen, während die Schichtfolie aus Verbundmaterial **durch** eine zweite Walze (21) gegenüber der ersten Walze (20) gewalzt wird, auf die die Schichtfolie aus Verbundmaterial gelegt und geformt wird, um eine konstante Stärke aufzuweisen, mit Regulierungsplatten (23a, 23b), die an der zweiten Walze (21) eingerichtet sind, einem Gefälle in einer Richtung der Stärke (X/Z) der Stirnflächen entlang der längeren Seiten der Stromsammelplatten (2); und

einen dritten Schritt zum Druckverbinden der geformten Schichtfolie aus Verbundmaterial auf die Stromsammelplatte (2) **durch** eine dritte Walze (22) gegenüber der zweiten Walze (21) und Trocknen der Schichtfolie aus Verbundmaterial, um die Verbundmaterialschicht (1) auf der Stromsammelelektrode (2) zu bilden.

2. Verfahren nach Anspruch 1, wobei die Stärke der Schichtfolie aus Verbundmaterial bei einem derartigen Kompressionsverhältnis geformt wird, dass, wenn die Folienstärke der Verbundmaterialschicht nach dem ersten Schritt "1" ist,

die Folienstärke der Schichtfolie aus Verbundmaterial nach dem zweiten Schritt "nicht kleiner als 0,4 und nicht größer als 0,6" ist und die Folienstärke der Schichtfolie aus Verbundmaterial nach dem dritten Schritt "nicht größer als 0,2" ist.

3. Verfahren nach Anspruch 1, wobei, wenn bei der Oberflächenrauhigkeit Ra der ersten und der zweiten Walze und der Stromsammelplatte (2);

die Oberflächenrauhigkeit der ersten Walze (20): a1
die Oberflächenrauhigkeit der zweiten Walze (21): a2
die Oberflächenrauhigkeit der Stromsammelplatte (2): a3
ist, ist a1 > a2 > a3.

4. Verfahren nach Anspruch 1, wobei das Mischen des aktiven Materials, des Lösungsmittels und des in dem Lösungsmittel lösbaren Bindemittels oder das Mischen des aktiven Materials, des Lösungsmittels, des in dem Lösungsmittel lösbaren Bindemittels und des elektrisch leitenden Materials durch Kneten durch einen Knetextruder durchgeführt wird.

5. Verfahren nach Anspruch 1, wobei Verbundmaterialschicht (1) mit einer konstanten Breite in einer Längsrichtung vor dem Trocknen im dritten Schritt entfernt wird, um ein glattes Teil zu bilden.

6. Verfahren nach Anspruch 1, wobei die Elektrodenplatte für eine nichtwässrige Sekundärbatterie eine positive Elektrodenplatte (6) mit einem Verbund-Lithiumoxid als ein aktives Material und eine negative Elektrodenplatte (7) umfasst, die als aktives Material ein Material aufweist, das in der Lage ist, Lithium zu halten, wobei die positive Elektrodenplatte (6) und die negative Elektrodenplatte (7) einander mit dazwischen geschaltetem Trennelement (8) gegenüberliegen und in einer elektrolytischen Lösung mit einem nichtwässrigen Lösungsmittel eingetaucht sind,

wobei die positive Elektrodenplatte (6) und die negative Elektrodenplatte (7) durch Laminieren der Verbundmaterialschicht (1) des aktiven Materials auf einer Oberfläche der Stromsammelplatte (2) ausgebildet sind und ein Gefälle in einer Richtung der Stärke (X/Z) der Stirnflächen der Verbundmaterialschicht (1) entlang der längeren Seiten der Stromsammelplatte (2)

$$0 < (X/Z) \leq 1 \text{ ist.}$$

7. Verfahren nach Anspruch 6, wobei das Gefälle in einer Richtung der Stärke (X/Z) der Stirnflächen der Verbundmaterialschicht (1) entlang der längeren Seiten der Stromsammelplatte (2)

$$0,2 \leq (X/Z) \leq 1 \text{ ist.}$$

8. Verfahren nach Anspruch 6, wobei die positive Elektrodenplatte (6) durch Laminieren auf der Stromsammelplatte (2) eines Verbundbeschichtungsmaterials der positiven Elektrode ausgebildet ist, das durch Kneten und Verteilen in einem nichtwässrigen Dispersionsmedium eines aktiven Materials mit wenigstens einem Lithium enthaltenden Verbundoxids, einem elektrisch leitenden Material und einem nicht wasserlöslichen hochpolymeren Bindemittel aufbereitet wurde.

9. Verfahren nach Anspruch 6, wobei die negative Elektrodenplatte (7) durch Laminieren auf der Stromsammelplatte (2) eines Verbundbeschichtungsmaterials der negativen Elektrode auf der Stromsammelplatte (2) ausgebildet ist, das durch Kneten und Verteilen in einem nichtwässrigen Dispersionsmedium eines aktiven Materials mit wenigstens einem Material, das in der Lage ist, Lithium zu halten, und einem wasserlöslichen hochpolymeren Bindemittel aufbereitet wurde.

10. Verfahren nach Anspruch 8, wobei ein Verhältnis durch Volumen des aktiven Materials, des Bindemittels und des elektrisch leitenden Materials derart ist, dass das Bindemittel "10" oder kleiner und das elektrisch leitende Material "10" oder kleiner mit Bezug auf "100" des aktiven Materials ist.

11. Verfahren nach Anspruch 6, wobei die Verbundmaterialschicht (1) der positiven Elektrodenplatte (6) oder der negativen Elektrodenplatte (7) auf der Stromsammelplatte (2) so laminiert wird, dass glatte Teile übrig bleiben, auf denen eine Oberfläche der Stromsammelplatte (2) von den Enden entlang der längeren Seiten der Sammelplatte freiliegen.

12. Verfahren nach Anspruch 6, wobei die Verbundmaterialschicht (1) der positiven Elektrodenplatte (6) oder der negativen Elektrodenplatte (7) von den Enden entlang der längeren Seiten der Stromsammelplatte (2) laminiert wird.

**Revendications**

1. Procédé de fabrication d'une plaque d'électrode de batterie secondaire non aqueuse, le procédé comprenant la formation d'une couche de matériau composite (1) sur une plaque de collecteur de courant (2), **caractérisé par**
une première étape de formation d'un film de couche de matériau composite en extrudant en continu, à partir d'une matrice (24) sur un premier rouleau (20), un matériau composite humide sous forme d'une argile obtenue en mélangeant un matériau actif, un solvant et un liant soluble dans le solvant, ou en mélangeant un matériau actif, un solvant, un liant soluble dans le solvant et un matériau électroconducteur ;
une deuxième étape d'étirement du film de couche de matériau composite pour obtenir une largeur constante, tout en roulant le film de couche de matériau composite pour obtenir une épaisseur constante à l'aide d'un deuxième rouleau (21) opposé au premier rouleau (20) sur lequel le film de couche de matériau composite est placé, et de formation, avec des plaques de régulateur (23a, 23b) placées sur le deuxième rouleau (21), d'une pente en direction de l'épaisseur (X/Z) de surfaces d'extrémité le long de côtés plus longs de la plaque de collecteur de courant (2) ; et

une troisième étape de collage sous pression du film de couche de matériau composite formé à la plaque de collecteur de courant (2) à l'aide d'un troisième rouleau (22) opposé au deuxième rouleau (21), et de séchage du film de couche de matériau composite pour former la couche de matériau composite (1) sur l'électrode de collecteur de courant (2).

2. Procédé selon la revendication 1, dans lequel l'épaisseur du film de couche de matériau composite est formée à un taux de compression tel que, quand l'épaisseur de film du film de couche de matériau composite est « 1 » après la première étape, l'épaisseur de film du film de couche de matériau composite après la deuxième étape est « supérieure ou égale à 0,4 et inférieure ou égale à 0,6 » ; et l'épaisseur de film du film de couche de matériau composite après la troisième étape est « inférieure ou égale à 0,2 ».

3. Procédé selon la revendication 1, dans lequel, quand la rugosité de surface Ra des premier et deuxième rouleaux et de la plaque de collecteur de courant (2) sont :

la rugosité de surface du premier rouleau (20) : a1,
la rugosité de surface du deuxième rouleau (21) : a2, et
la rugosité de surface de la plaque de collecteur de courant (2) : a3,
a1 > a2 > a3.

4. Procédé selon la revendication 1, dans lequel le mélange du matériau actif, du solvant et du liant soluble dans le solvant, ou le mélange du matériau actif, du solvant, du liant soluble dans le solvant et du matériau électroconducteur, est mis en oeuvre par pétrissage à l'aide d'une extrudeuse de pétrissage.

5. Procédé selon la revendication 1, dans lequel la couche de matériau composite (1) à largeur constante en direction longitudinale est éliminée avant le séchage à la troisième étape pour former une portion ordinaire.

6. Procédé selon la revendication 1, dans lequel la plaque d'électrode de batterie secondaire non aqueuse comprenant une plaque d'électrode positive (6) comportant un oxyde de lithium composite comme matériau actif, et une plaque d'électrode négative (7) comportant comme matériau actif un matériau capable de retenir le lithium, la plaque d'électrode positive (6) et la plaque d'électrode négative (7) étant opposées avec un séparateur (8) interposé entre elles et étant immergées dans une solution électrolytique contenant un solvant non aqueux, dans lequel la plaque d'électrode positive (6) ou la plaque d'électrode négative (7) est formée en laminant la couche de matériau composite (1) du matériau actif sur une surface de la plaque de collecteur de courant (2), et une pente en direction de l'épaisseur (X/Z) de surfaces d'extrémité de la couche de matériau composite (1) le long de côtés plus longs de la plaque de collecteur de courant (2) est telle que

$$0 < (X/Z) \leq 1.$$

7. Procédé selon la revendication 6, dans lequel la pente en direction de l'épaisseur (X/Z) des surfaces d'extrémité de la couche de matériau composite (1) le long des côtés plus longs de la plaque de collecteur de courant (2) est telle que

$$0,2 \leq (X/Z) \leq 1.$$

8. Procédé selon la revendication 6, dans lequel la plaque d'électrode positive (6) est formée en laminant sur la plaque de collecteur de courant (2) un matériau de revêtement composite d'électrode positive préparé en pétrissant et dispersant dans un support de dispersion non aqueux un matériau actif comprenant au moins un oxyde composite contenant du lithium, un matériau électroconducteur et un liant à haute teneur en polymère non soluble dans l'eau.

9. Procédé selon la revendication 6, dans lequel la plaque d'électrode négative (7) est formée en laminant sur la plaque de collecteur de courant (2) un matériau de revêtement composite d'électrode négative préparé en pétrissant et dispersant dans un support de dispersion un matériau actif comprenant au moins un matériau capable de retenir le lithium, et un liant à haute teneur en polymère soluble dans l'eau.

10. Procédé selon la revendication 8, dans lequel les proportions en volume du matériau actif, du liant et du matériau électroconducteur sont telles que le liant est inférieur ou égal à « 10 » et le matériau électroconducteur est inférieur ou égal à « 10 » si le matériau actif vaut « 100 ».

11. Procédé selon la revendication 6, dans lequel la plaque d'électrode positive (6) ou la plaque d'électrode négative (7) comporte la couche de matériau composite (1) laminée sur la plaque de collecteur de courant (2), de telle sorte que des portions ordinaires où une surface de la plaque de collecteur de courant (2) est exposée à partir d'extrémités le long des côtés plus longs de la plaque de collecteur sont laissées.

12. Procédé selon la revendication 6, dans lequel la plaque d'électrode positive (6) ou la plaque d'électrode négative (7) comporte la couche de matériau composite (1) laminée à partir d'extrémités le long des côtés plus longs de la plaque de collecteur de courant (2).

# FIG. 1

# FIG. 2

# FIG. 3

# FIG. 4

# FIG. 5

# FIG. 6

# FIG. 7

# FIG. 8

# FIG. 9

# FIG. 10

# FIG. 11

## FIG. 12

## FIG. 13

# FIG. 14

PRIOR ART

# FIG. 15

PRIOR ART

# FIG. 16A

PRIOR ART

104
105
107a

# FIG. 16B

PRIOR ART

107b    105
104
107a    105

# FIG. 16C

PRIOR ART

107b    105
104
107a    105

# FIG. 16D

PRIOR ART

108b    105
104
108a    105

FIG. 17A

FIG. 17B

FIG. 18

**EP 2 403 037 B1**

## REFERENCES CITED IN THE DESCRIPTION

**Patent documents cited in the description**

- JP 2869156 B
- JP 2005183181 A